(19) Europäisches Patentamt
European Patent Office
Office européen des brevets

(11) **EP 2 947 325 B1**

(12) **EUROPÄISCHE PATENTSCHRIFT**

(45) Veröffentlichungstag und Bekanntmachung des Hinweises auf die Patenterteilung:
**04.12.2019 Patentblatt 2019/49**

(51) Int Cl.:
*F04D 13/12* *(2006.01)*     *F04D 15/00* *(2006.01)*
*F04D 15/02* *(2006.01)*     *G05B 13/02* *(2006.01)*

(21) Anmeldenummer: **14169568.4**

(22) Anmeldetag: **23.05.2014**

(54) **Pumpensteuerverfahren**

Pump control method

Procédé de commande de pompe

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.11.2015 Patentblatt 2015/48**

(73) Patentinhaber: **Grundfos Holding A/S**
**8850 Bjerringbro (DK)**

(72) Erfinder:
• **Mogensen, Niels**
**8800 Viborg (DK)**

• **Kallesøe, Carsten Skovmose**
**8800 Viborg (DK)**

(74) Vertreter: **Patentanwälte Vollmann Hemmer Lindfeld**
**Partnerschaft mbB**
**Wallstraße 33a**
**23560 Lübeck (DE)**

(56) Entgegenhaltungen:
**EP-A1- 2 476 907**     **EP-A1- 2 610 693**
**WO-A1-2009/079447**     **WO-A1-2012/173552**
**WO-A2-2009/053923**     **US-A1- 2009 287 357**
**US-A1- 2011 176 933**

**Beschreibung**

Die Erfindung betrifft ein Pumpensteuerverfahren zum Steuern des Betriebs eines Pumpensystems mit wenigstens zwei Pumpenaggregaten, welche parallel oder in Reihe zueinander angeordnet sind.

Derartige Pumpensysteme finden sich beispielsweise in Brunnenfeldern, in welchen mehrere Brunnen mit jeweils zumindest einer Pumpe vorhanden sind, welche parallel Wasser aus den Brunnen fördern. Je nach erforderlicher Wassermenge können die Pumpen in unterschiedlicher Zahl in Betrieb genommen werden und mit unterschiedlicher Drehzahl betrieben werden.

Ferner sind Pumpensysteme bekannt, bei welchen zur Druckerhöhung mehrere Pumpen in Reihe geschaltet werden. Je nach Höhe der zu erzeugenden Druckdifferenz können dabei die Pumpen in unterschiedlicher Zahl oder unterschiedlicher Leistung betrieben werden.

Wenn in solchen Pumpensystemen verschiedene Arten bzw. verschiedene Größen von Pumpen oder Pumpen mit verschiedenen hydraulischen Anschlussbedingungen gemeinsam betrieben werden, ist es schwierig, den Betrieb der einzelnen Pumpen so zu optimieren, dass die gewünschte hydraulische Last, das heißt ein gewünschter Differenzdruck oder Durchfluss bei minimalem Energieverbrauch erreicht werden kann.

WO 2009/053923 A2 offenbart ein Verfahren zur Optimierung eines Pumpensystems, bei welchem mehrere Pumpen parallel zueinander angeordnet sind. Gemäß diesem System wird für jede Pumpe im System eine charakteristische Kurve erfasst, welche den Energieverbrauch pro Fördermenge über der Drehzahl bzw. Frequenz aufträgt. Abhängig von diesen Kurven werden die Pumpen jeweils bei einer Drehzahl betrieben, bei welcher der Energieverbrauch ein Minimum annimmt. Nachteilig an diesem System ist, dass bei Veränderungen des Systems vor der Inbetriebnahme die charakteristischen Kurven messtechnisch ermittelt werden müssen.

EP 2 610 693 A1 offenbart ebenfalls ein Verfahren zur Optimierung des Energieverbrauchs in einem Pumpensystem, bei welchem ebenfalls bei der Inbetriebnahme zunächst Pumpencharakteristiken erfasst werden und anschließend die Pumpenregelung bzw. -steuerung auf Grundlage dieser erfassten Charakteristiken durchgeführt wird. Dieses System hat ebenfalls den Nachteil, dass bei der Inbetriebnahme zunächst die Charakteristiken zu erfassen sind und dass darüber hinaus das Verfahren nicht automatisch auf laufende Veränderungen im System reagiert.

US 2009/287357 A1 offenbart ein weiteres Verfahren zur Pumpensteuerung mehrerer Pumpen in einem Pumpensystem. Auch dieses System benötigt zunächst Ausgangswerte für jedes Pumpenaggregat, wie beispielsweise die Maximalleistung der Pumpen, wodurch die Inbetriebnahme verkompliziert wird und eine automatische Anpassung des Verfahrens an Veränderungen im System nur schwer möglich ist.

Es ist Aufgabe der Erfindung, ein Pumpensteuerverfahren sowie ein Pumpensystem bereitzustellen, welche einen verbesserten energieoptimierten Betrieb mehrerer Pumpenaggregate ermöglichen, wobei die Energieoptimierung insbesondere auf Veränderungen im System reagieren kann.

Diese Aufgabe wird durch ein Pumpensteuerverfahren mit den in Anspruch 1 angegebenen Merkmalen sowie durch ein Pumpensystem mit den in Anspruch 14 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße Pumpensteuerverfahren ist zum Steuern des Betriebs eines Pumpensystems mit zwei oder mehr Pumpenaggregaten vorgesehen. Dabei können die mehreren Pumpenaggregate parallel oder in Reihe zueinander angeordnet sein. Eine Parallelschaltung ist in der Regel vorgesehen, um durch mehrere Pumpen den Förderstrom zu erhöhen, während die Reihenschaltung vorgesehen ist, um durch mehrere hintereinander geschaltete Pumpen eine größere Druckerhöhung zu ermöglichen.

Erfindungsgemäß ist nun ein Pumpensteuerverfahren vorgesehen, welches es ermöglicht, die mehreren Pumpenaggregate besonders energieeffizient einzusetzen, das heißt die erforderliche hydraulische Gesamtlast so auf die mehreren Pumpenaggregate zu verteilen, dass diese möglichst energieeffizient betrieben werden. Die hydraulische Gesamtlast ist dabei im Falle einer Parallelschaltung der gesamte Durchfluss des Pumpensystems, während die hydraulische Gesamtlast bei einer Reihenschaltung der Pumpenaggregate die gesamte Druckdifferenz über dem Pumpensystem, das heißt die Gesamtförderhöhe des Pumpensystems ist.

Erfindungsgemäß wird in einem ersten Schritt die spezifische Gesamtleistung Es des gesamten Pumpensystems ermittelt. Die Leistung ist dabei die aufgenommene Leistung des gesamten Pumpensystems, das heißt die aufgenommene Leistung aller in dem Pumpensystem gemeinsam gesteuerter bzw. in der nachfolgend beschriebenen Weise optimierter Pumpenaggregate. Insbesondere handelt es sich bei der Leistung um die elektrische Leistung, welche die Pumpenaggregate aufnehmen. Aus der ermittelten Gesamtleistung wird die spezifische Gesamtleistung Es bestimmt, indem die ermittelte Gesamtleistung ins Verhältnis zu der hydraulischen Gesamtlast des gesamten Pumpensystems gesetzt wird. Dabei kann es sich wie oben beschrieben um den Gesamtdurchfluss bzw. die Gesamtförderhöhe handeln. Die hydraulische Gesamtlast kann dabei die hydraulische Soll-Gesamtlast oder vorzugsweise die tatsächliche erfasste hydraulische Gesamtlast sein.

Im nächsten Schritt wird erfindungsgemäß eine spezifische individuelle Leistung $E_{P,n}$ jedes einzelnen Pumpenaggregates des Pumpensystems ermittelt. Dazu wird die individuelle Leistung jedes Pumpenaggregates, das heißt die individuelle aufgenommene Leistung des Pumpenaggregates, welche vorzugsweise die elektrische Antriebsleistung ist, erfasst. Diese wird dann ins Verhältnis zu der individuellen hydraulischen Last des jeweiligen Pumpenaggregates gesetzt. Die individuelle hydraulische Last kann dabei wie beschrieben bei einer Parallelschaltung der Förderstrom des einzelnen Pumpenaggregates oder im Falle einer Reihenschaltung mehrerer Pumpenaggregate die Förderhöhe bzw. der Differenzdruck des einzelnen Pumpenaggregates sein. Die spezifische individuelle Leistung $E_{P,n}$ bildet somit das Verhältnis der individuellen Leistung eines Pumpenaggregates zu dessen individueller hydraulischer Last.

Aus des so bestimmten spezifischen Gesamtleistung Es sowie der spezifischen individuellen Leistung $E_{P,n}$ jedes Pumpenaggregates wird in einem nächsten Schritt für jedes Pumpenaggregat ein individueller Lastfaktor $E_{gain,n}$ für jedes Pumpenaggregat gemäß der Gleichung

$$E_{gain,n} = \frac{E_S}{E_{P,n}}$$

gebildet.

Auf Grundlage dieses so ermittelten individuellen Lastfaktors für jedes zu steuernde Pumpenaggregat des Pumpensystems wird im nächsten Schritt die individuelle hydraulische Last des Pumpenaggregates angepasst. Diese Anpassung erfolgt auf Grundlage des individuellen Lastfaktors und der gewünschten hydraulischen Last, vorzugsweise einer gewünschten hydraulischen Gesamtlast. Das heißt die hydraulische Last, welche das einzelne Pumpenaggregat erbringt, wird basierend auf der gewünschten hydraulischen Last, d.h. vorzugsweise der gewünschten hydraulischen Gesamtlast unter Berücksichtigung des individuellen Lastfaktors eingestellt. Das heißt tatsächlich wird das einzelne Pumpenaggregat dann nicht mit einer ermittelten hydraulischen Last, welche sich aus einer einfachen arithmetische Aufteilung der gewünschten hydraulischen Gesamtlast auf die Pumpenaggregate ergeben würde, betrieben, sondern mit einer durch den Lastfaktor $E_{gain}$ angepassten hydraulischen Last. Der Lastfaktor $E_{gain}$ berücksichtigt dabei die Energieeffizienz jedes einzelnen Pumpenaggregates und sorgt dafür, dass diejenigen Pumpenaggregate mit einer besseren Energieeffizienz vorrangig oder mit einem größeren Anteil betrieben werden, so dass insgesamt die Energieeffizienz des gesamten Pumpensystems verbessert wird.

Gemäß einer ersten Ausführungsform der Erfindung erfolgt das Anpassen der individuellen hydraulischen Last der Pumpenaggregate in Abhängigkeit einer gewünschten individuellen hydraulischen Last des jeweiligen Pumpenaggregates, wobei die gewünschte individuelle hydraulische Last vorzugsweise durch Division einer gewünschten hydraulischen Gesamtlast durch die Anzahl der aktiven Pumpenaggregate bestimmt wird.

Das heißt die gewünschte individuelle hydraulische Last wird durch eine einfache arithmetische Aufteilung der Gesamtlast auf die Anzahl der vorhandenen Pumpenaggregate bestimmt. Nachfolgend wird gemäß dieser Ausführungsform unter Berücksichtigung des individuellen Lastfaktors $E_{gain,n}$ dann für jedes einzelne Pumpenaggregat diese zuvor bestimmte gewünschte individuelle hydraulische Last zur Energieoptimierung angepasst, das heißt erhöht oder verringert, so dass sich eine von der zuvor vorgenommenen einfachen Aufteilung abweichende Aufteilung der hydraulischen Lasten auf die mehreren Pumpenaggregate ergibt, so dass diese möglichst energieeffizient eingesetzt werden. Das bedeutet es wird ein größerer Anteil der hydraulischen Gesamtlast auf besonders energieeffiziente Pumpenaggregate verteilt.

Weiter bevorzugt erfolgt das Anpassen der individuellen hydraulischen Last jedes Pumpenaggregates durch eine Multiplikation der gewünschten hydraulischen Last, insbesondere einer gewünschten hydraulischen Last, mit dem jeweiligen Lastfaktor $E_{gain,n}$ oder durch Multiplikation der gewünschten hydraulischen Last mit einer von dem jeweiligen Lastfaktor $E_{gain,n}$ abgeleiteten Größe. So kann der Lastfaktor $E_{gain,n}$ zum Bilden einer abgeleiteten Größe einer mathematischen Operation unterzogen sein oder beispielsweise noch mit zusätzlichen Faktoren multipliziert oder potenziert sein.

Insbesondere bei einer Reihenschaltung der Pumpenaggregate erfolgt das Anpassen der individuellen hydraulischen Last jedes dieser Pumpenaggregate vorzugsweise durch Multiplikation der gewünschten hydraulischen Last, insbesondere der gewünschten individuellen hydraulischen Gesamtlast mit dem Quadrat des jeweiligen Lastfaktors $E_{gain,n}$.

Erfindungsgemäß arbeitet das Steuerverfahren derart, dass ein Pumpenaggregat der wenigstens zwei Pumpenaggregate dann ausgeschaltet wird, wenn der jeweilige individuelle Lastfaktor $E_{gain,n}$, welcher zu diesem Pumpenaggregat gehört, unterhalb eines vorbestimmten Minimums liegt. So kann ein Pumpenaggregat mit geringer Energieeffizienz abgeschaltet werden und die gesamte hydraulische Last auf Pumpenaggregate mit besserer Energieeffizienz verteilt werden.

Erfindungsgemäß wird ein Pumpenaggregat der wenigstens zwei Pumpenaggregate dann eingeschaltet, wenn ein zugehöriger, vorzugsweise geschätzter individueller Lastfaktor $E_{gain,n}$, welcher zu diesem Pumpenaggregat gehört, oberhalb eines vorbestimmten Maximums liegt. So kann ein beispielsweise zuvor nach dem oben genannten Verfahrensschritt abgeschaltetes Pumpenaggregat wieder eingeschaltet werden.

Gemäß einer weiteren bevorzugten Ausführungsform sind die wenigstens zwei Pumpenaggregate parallel zueinander angeordnet, wobei die hydraulische Gesamtlast des gesamten Pumpensystems der Durchfluss des gesamten Pumpensystems ist und die individuelle hydraulische Last jedes Pumpenaggregates der individuelle Durchfluss des jeweiligen Pumpenaggregates ist. Weiter bevorzugt ist die gewünschte hydraulische Gesamtlast ein gewünschter Gesamtdurchfluss des Pumpensystems bestehend aus mehreren parallel angeordneten Pumpenaggregaten.

Gemäß einer weiteren bevorzugten Ausführungsform können die wenigstens zwei Pumpenaggregate in Reihe geschaltet sein, wobei die hydraulische Gesamtlast des gesamten Pumpensystems in diesem Fall der Differenzdruck über dem gesamten Pumpensystem ist und die individuelle hydraulische Last jedes Pumpenaggregates der individuelle Differenzdruck bzw. die individuelle Förderhöhe über dem jeweiligen Pumpenaggregat ist. Dabei ist die gewünschte hydraulische Gesamtlast weiter bevorzugt ein gewünschter gesamter Differenzdruck bzw. eine gewünschte Gesamtförderhöhe. Bei einer Vielzahl von Pumpenaggregaten kann auch eine Kombination von parallel und in Reihe geschalteter Pumpenaggregate verwendet werden, wobei die Steuerung dann in Abhängigkeit sowohl des Durchflusses als auch der Förderhöhe erfolgen kann.

Gemäß einer weiteren Ausführungsform des erfindungsgemäßen Steuerverfahrens wird für ein Pumpenaggregat, welches abgeschaltet worden ist, für die weitere Steuerung dessen Leistung, das heißt dessen aufgenommene Leistung, insbesondere die elektrische Leistung vor dem Abschalten berücksichtigt. Das heißt für dieses Pumpenaggregat wird, solange es ausgeschaltet ist, die Berechnung der oben genannten Faktoren auf Grundlage der letzten Leistung vor dem Abschalten durchgeführt. So kann ein geschätzter individueller Lastfaktor gebildet werden.

Erfindungsgemäß wird die individuelle hydraulische Last für jedes Pumpenaggregat geregelt, das heißt es ist ein Regelkreis für die individuelle hydraulische Last im Pumpenaggregat vorgesehen. Das Pumpenaggregat kann dazu insbesondere in seiner Drehzahl einstellbar sein, so dass durch Drehzahländerung die Regelung auf die gewünschte hydraulische Last erfolgen kann. Weiter bevorzugt erfolgt alternativ oder zusätzlich eine Regelung der hydraulischen Gesamtlast des gesamten Pumpensystems durch einen zugehörigen Regelkreis.

Gemäß einer weiteren bevorzugten Variante des erfindungsgemäßen Pumpensteuerverfahrens erfolgt in zumindest einem, vorzugsweise in jedem der Pumpenaggregate eine Messwerterfassung der individuellen hydraulischen Last sowie vorzugsweise der Leistung, das heißt der aufgenommenen Leistung des Pumpenaggregates. So kann auf eine externe Messwerterfassung verzichtet werden. Die erforderlichen Messwerte werden bevorzugt direkt im Pumpenaggregat erfasst. Dabei kann die hydraulische Last, wie die Förderhöhe oder der Durchfluss direkt bestimmt werden oder auch aus weiteren Größen, insbesondere elektrischen Größen eines elektrischen Antriebsmotors gegebenenfalls unter Berücksichtigung zusätzlicher Messwerte abgeleitet werden. Es können auch erforderliche Sensoren direkt in das Pumpenaggregat integriert sein.

Weiter bevorzugt wird das erfindungsgemäße Pumpensteuerverfahren derart ausgeführt, dass ein Bestimmen der spezifischen individuellen Leistung $E_{P,n}$ jedes Pumpenaggregates und die Berechnung des individuellen Lastfaktors $E_{gain,n}$ für jedes Pumpenaggregat durch eine individuelle Steuereinheit für das jeweilige Pumpenaggregat oder durch eine zentrale Steuereinheit für mehrere Pumpenaggregate ausgeführt werden. Die individuelle Steuereinheit kann besonders bevorzugt in das Pumpenaggregat selber integriert sein.

Das erfindungsgemäße sowie nachfolgend beschriebene Pumpensteuerverfahren wird besonders bevorzugt während des Betriebs des Pumpensystems kontinuierlich ausgeführt. Dadurch erfolgt während des Betriebes kontinuierlich eine Anpassung der Lastverteilung und damit eine Optimierung des Energieverbrauchs.

Gemäß einer besonders bevorzugten Ausführungsform der Erfindung kann in dem Pumpensteuerverfahren noch ein weiterer Verfahrens- oder Regelschritt vorgesehen sein, welcher dazu dient, die Verteilung der hydraulischen Last in vorbestimmten Bereichen zu halten. So wird vorzugsweise die gewünschte individuelle hydraulische Last jedes Pumpenaggregates derart eingestellt, dass die individuellen hydraulischen Lasten der zumindest zwei, vorzugsweise von zumindest drei Pumpenaggregaten in einem vorbestimmten Verhältnis zueinander stehen. Dies kann insbesondere bei Anwendung parallel geschalteter Pumpenaggregate wie in Brunnenfeldern von Vorteil sein, da so bestimmte Mischungsverhältnisse zwischen mehreren Brunnen trotz der vorangehend beschriebenen Optimierung der Lastverteilung gewährleistet werden können. So werden zwei überlagerte Regelungen vorgesehen nämlich einmal die Lastverteilung zur Optimierung des Energieverbrauches und übergeordnet eine Regelung, welche die Lastverteilung in vorbestimmten Verhältnissen zueinander hält. So kann ein Verhältnis beispielsweise durch folgende Ungleichung definiert sein

$$b_i > a_{i1} \cdot q_1 + a_{i2} \cdot q_2 + a_{i3} \cdot q_3$$

wobei $b_i$ eine Konstante ist, welche vorzugsweise gleich 0 ist und $a_{i1}$, $a_{i2}$ und $a_{i3}$ Konstanten sind, welche das Verhältnis der Förderströme $q_1$, $q_2$ und $q_3$ zueinander definieren. Dies ist ein Beispiel für drei Pumpenaggregate. Eine entsprechende Ungleichung könnte auch für mehr Pumpenaggregate aufgestellt werden. Es ist zu erkennen, dass trotz der so definierten Verhältnisse ein Optimierungsspielraum verbleibt, in welchem die Lastverteilung zur Optimierung des Energieverbrauches variiert werden kann.

Neben dem vorangehend beschriebenen Pumpensteuerverfahren ist erfindungsgemäß ein Pumpensystem mit wenigstens zwei Pumpenaggregaten vorgesehen, wobei die Pumpenaggregate parallel oder in Reihe zueinander angeordnet sein können. In diesem Pumpensystem kann das Pumpensteuerverfahren gemäß der vorangehenden Beschreibung zur Anwendung kommen, wobei eine oder mehrere Steuereinrichtungen vorhanden sind, in welchen das Steuerverfahren ausgeführt wird. Insofern wird bezüglich der Ausgestaltung des Pumpensystems und dessen Steuereinrichtungen ebenfalls auf die vorangehende Beschreibung des Pumpensteuerverfahrens, welches in solchen Steuereinrichtungen zur Anwendung kommen kann, verwiesen.

Das erfindungsgemäße Pumpensystem weist zumindest eine Steuereinheit auf, welche zum Einstellen der gewünschten hydraulischen Gesamtlast für das gesamte Pumpensystem und zum Bestimmen einer spezifischen Gesamtleistung für das gesamte Pumpensystem ausgebildet ist. Wenn die Pumpen parallel geschaltet sind, ist die hydraulische Gesamtlast der Gesamtdurchfluss, während in einer Reihenschaltung die Gesamtlast der Gesamtdifferenzdruck bzw. die Gesamtförderhöhe des Pumpensystems ist. Bei der Gesamtleistung handelt es sich um die gesamte aufgenommene Leistung, insbesondere die gesamte aufgenommene elektrische Leistung des Pumpensystems, das heißt aller zum Pumpensystem gehörenden Pumpenaggregate. Ferner ist in dem Pumpensystem zumindest eine Steuereinheit vorgesehen, welche zum Bestimmen einer spezifischen individuellen Leistung $E_{P,n}$ eines einzelnen Pumpenaggregates ausgebildet ist, welche eine individuelle Leistung relativ zu der individuellen hydraulischen Last des jeweiligen Pumpenaggregates definiert. Für die individuelle Leistung $E_{P,n}$ jedes Pumpenaggregates wird dazu die individuelle Leistung, das heißt die aufgenommene individuelle Leistung, insbesondere elektrische Leistung durch die individuelle hydraulische Last, das heißt bei Parallelschaltung den individuellen Förderstrom oder bei Reihenschaltung den individuellen Differenzdruck, dividiert. Die Steuereinheit ist ferner zum Berechnen eines individuellen Lastfaktors $E_{gain,n}$ für das jeweilige Pumpenaggregat gemäß folgender Gleichung ausgebildet:

$$E_{gain,n} = \frac{E_S}{E_{P,n}}$$

Ferner ist die Steuereinheit zum Anpassen einer gewünschten individuellen hydraulischen Last des jeweiligen Pumpenaggregates in Abhängigkeit des so gebildeten Lastfaktors $E_{gain}$ und einer gewünschten hydraulischen Last, insbesondere der gewünschten individuellen hydraulischen Last ausgebildet. Dazu kann wie oben beschrieben die gewünschte hydraulische Last, d. h. vorzugsweise die gewünschte hydraulische Gesamtlast, beispielsweise mit dem Lastfaktor $E_{gain,n}$ oder dessen Quadrat multipliziert werden. Diesbezüglich wird auf die obige Beschreibung des Pumpensteuerverfahrens verwiesen. Alle die zuvor vorgenannten Steuereinheiten können in eine Steuereinheit integriert sein. Alternativ ist es möglich, zumindest zwei verschiedene Arten von Steuereinheiten vorzusehen, nämlich eine zentrale Steuereinheit, welche die hydraulische Gesamtlast einstellt und die spezifische Gesamtleistung bestimmt und lokale Steuereinheiten, welche ausgebildet sind zum Bestimmen der individuellen Leistung und zur Berechnung des individuellen Lastfaktors $E_{gain,n}$ und zum Anpassen der hydraulischen Last jedes einzelnen Pumpenaggregates.

Die Steuereinheit, welche zum Bestimmen des individuellen Lastfaktors und zum Einstellen der individuellen hydraulischen Last ausgebildet ist, ist vorzugsweise als lokale oder individuelle Steuereinheit einem Pumpenaggregat zugeordnet und weiter bevorzugt in dieses Pumpenaggregat integriert. So wird eine dezentrale Steuerung der einzelnen Pumpenaggregate erreicht. Insbesondere können Messwerte an den einzelnen Pumpenaggregaten direkt erfasst und direkt verarbeitet werden.

Besonders bevorzugt weisen die Pumpenaggregate in ihrer Drehzahl einstellbare und geregelte Antriebsmotoren auf. So kann durch die Drehzahländerung die Förderhöhe bzw. der Differenzdruck oder der Volumenstrom geändert werden. Wie oben beschrieben können die Pumpenaggregate so ausgebildet sein, dass sie den Durchfluss und gegebenenfalls den Differenzdruck direkt erfassen oder aus elektrischen Größen ableiten.

Das Pumpensystem ist besonders bevorzugt als ein Brunnenfeld ausgebildet, wobei einzelne Pumpenaggregate einzelnen Brunnen zugeordnet sind.

Weiter bevorzugt sind die genannten Steuereinheiten so ausgebildet, dass sie eine oder mehrere der oben beschriebenen Varianten des Pumpensteuerverfahrens ausführen können.

Besonders bevorzugt kann eine Steuereinheit, insbesondere eine zentrale Steuereinheit so ausgebildet sein, dass sie die individuellen hydraulischen Lasten der zumindest zwei, vorzugsweise drei oder mehr Pumpenaggregate in einer übergeordneten Regelung in ein vorbestimmtes Verhältnis zueinander setzt bzw. die Lastverteilung in einem vorbestimmten Verhältnis zueinander hält. Auch diesbezüglich wird hinsichtlich der näheren Ausgestaltung auf die Beschreibung zu dem Pumpensteuerverfahren verwiesen.

Nachfolgend wird die Erfindung beispielhaft anhand der beigefügten Figuren beschrieben. In diesen zeigt:

Fig. 1 schematisch ein Pumpensystem mit mehreren parallel geschalteten Pumpenaggregaten,

Fig. 2 ein Pumpensystem mit mehreren parallel geschalteten Pumpenaggregaten, wie es in einem Brunnenfeld zum Einsatz kommt,

Fig. 3 schematisch die Anordnung von mehreren in Reihe geschalteten Pumpenaggregaten,

Fig. 4 schematisch das Steuer- bzw. Regelverfahren zur Anpassung der Lastverteilung auf mehrere Pumpenaggregate und

Fig. 5 schematisch einen zusätzliche Regelung, um die Verteilung der hydraulischen Lasten in einem vorbestimmten Verhältnis zu halten.

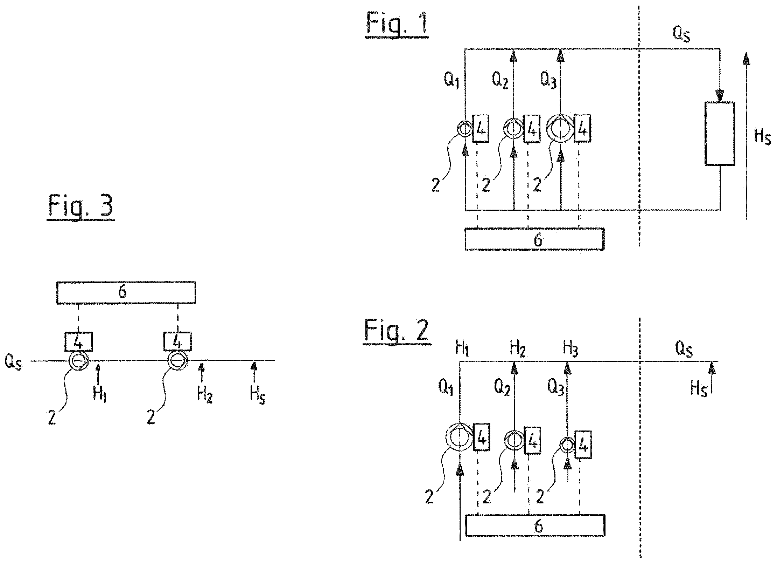

Das erfindungsgemäße Pumpensteuerverfahren bzw. das erfindungsgemäße Pumpensystem kann in verschiedenen Ausgestaltungen, insbesondere mit einer Parallel- oder Reihenschaltung mehrerer Pumpenaggregate zum Einsatz kommen. Fig. 1 zeigt eine Anwendung, in welcher drei Pumpenaggregate 2 in einem Kreislauf parallel zueinander angeordnet sind. Dies ist eine Booster- Anwendung, in welcher sich die drei Förderströme $Q_1$, $Q_2$ und $Q_3$ der drei Pumpenaggregate 2 zu einem Gesamtförderstrom $Q_s$ addieren. Der Differenzdruck bzw. die Förderhöhe $H_S$ ist bei allen drei Pumpenaggregaten 2 gleich. Die Pumpenaggregate 2 können dabei, wie in Fig. 1 durch die Größe angedeutet ist, unterschiedlich dimensioniert sein.

Fig. 2 zeigt eine Anordnung von drei Pumpenaggregaten 2 welche parallel geschaltet sind, jedoch nicht im Kreislauf angeordnet sind. Eine solche Anwendung wird beispielsweise in einem Brunnenfeld eingesetzt, wobei die drei Pumpenaggregate 2 unterschiedlichen Brunnen zugeordnet sein können. Auch hier sind die Pumpenaggregate 2 unterschiedlich dimensioniert, wie durch die verschiedenen Größen in Fig. 2 angedeutet ist. Bei dieser Ausgestaltung haben die drei Pumpenaggregate 2 unterschiedliche Förderströme $Q_1$, $Q_2$ und $Q_3$ sowie verschiedene Förderhöhen $H_1$, $H_2$ und $H_3$, welche sich zu einem Gesamtförderstrom $Q_s$ sowie einer Gesamtförderhöhe $H_s$ summieren.

Fig. 3 zeigt eine Anwendung, bei welcher zwei Pumpenaggregate 2 in Reihe geschaltet sind, beispielsweise um eine stärkere Druckerhöhung zu ermöglichen. Der Förderstrom $Q_s$ ist hier durch beide Pumpenaggregate 2 gleich, allerdings addieren sich die Förderhöhen $H_1$ und $H_2$ der beiden Pumpenaggregate 2 zu einer Gesamtförderhöhe $H_s$. Auch hier können die beiden Pumpenaggregate 2 unterschiedlich dimensioniert sein.

Da aufgrund der unterschiedlichen Dimensionierung der Pumpenaggregate 2 und der verschiedenen hydraulischen Anschlussbedingungen diese Pumpenaggregate 2 unterschiedlich effizient arbeiten, ist es erfindungsgemäß durch ein spezielles Pumpensteuerverfahren vorgesehen, die gesamte hydraulische Last, das heißt entweder den gesamten Förderstrom $Q_s$ oder die gesamte Förderhöhe $H_s$ so auf die verschiedenen Pumpenaggregate 2 zu verteilen, dass eine möglichst große Energieeffizienz erreicht wird. Die Pumpenaggregate 2 sind dabei elektrisch angetrieben und weisen jeweils eine lokale individuelle Steuereinheit 4 auf. Jedes Pumpensystem weist darüber hinaus noch eine zentrale Steuereinheit 6 auf, welche mit den individuellen Steuereinheiten 4 signalverbunden sind. Dies kann entweder über elektrische oder optische Signalleitungen oder auch über drahtlose Signalverbindungen, wie beispielsweise Funkverbindungen oder eine Powerline-Kommunikation erfolgen.

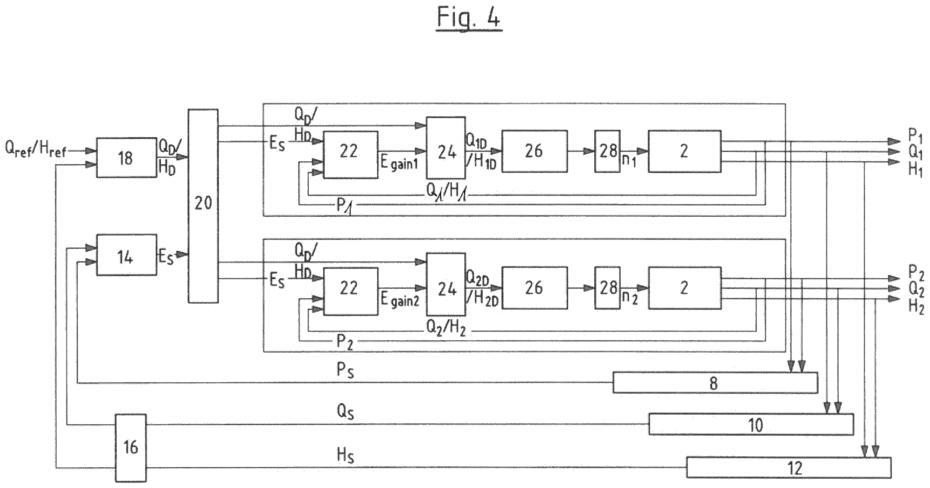

Das Steuerverfahren wird nachfolgend näher anhand von Fig. 2 beschrieben. Dabei sind Teile der Steuerung bzw. Regelung wie in Figur 4 gezeigt den individuellen Steuereinheiten 4 zugeordnet bzw. werden von diesen ausgeführt, während andere Teile von der zentralen Steuereinheit 6 ausgeführt werden. In Fig. 2 sind beispielhaft drei Pumpen mit drei Förderströmen $Q_1$, $Q_2$ und $Q_3$ sowie drei Förderhöhen $H_1$, $H_2$ und $H_3$ gezeigt. In Fig. 2 werden nur zwei Pumpen mit den Förderströmen $Q_1$ und $Q_2$ sowie den Förderhöhen $H_1$ und $H_2$ berücksichtigt. Es ist jedoch zu verstehen, dass Grundsätzlich eine beliebige Anzahl von Pumpen Verwendung finden kann. Daher wird nachfolgend der Index n verwendet, um individuelle Parameter einer beliebigen Pumpe zu kennzeichnen. Die einzelnen Pumpenaggregate nehmen eine elektrische Leistung $P_n$ auf erzeugen einen Förderstrom $Q_n$ (in Fig. 4: $Q_1$, $Q_2$)sowie einen Differenzdruck bzw. eine Förderhöhe $H_n$. (in Fig. 4: $H_1$, $H_2$)In dem Summenmodul 8, welches der zentralen Steuereinheit 6 zugeordnet sein kann, werden die elektrischen Leistungen $P_n$ (hier $P_1$ und $P_2$) bzw. die elektrische Leistungsaufnahme sämtlicher Pumpenaggregate 2 aufsummiert. Entsprechend wird in dem Summenmodul 10 der Förderstrom $Q_n$ (hier $Q_1$ und $Q_2$), d. h. die hydraulische Last der Pumpenaggregate 2 aufsummiert. In dem Summenmodul 12 werden entsprechend die Förderhöhen $H_n$ (hier $H_1$ und $H_2$) als hydraulische Last aufsummiert. Dabei ist zu verstehen, dass das Summenmodul 10 zur Aufsummierung der Förderströme $Q_n$, insbesondere bei einer Parallelschaltung der Pumpenaggregate 2 zum Einsatz kommt, während das Summenmodul 12 zum Aufsummieren der Förderhöhen $H_n$ bei Reihenschaltung von Pumpenaggregaten 2 zum Einsatz kommt. Wenn das System nur für eine dieser Anwendungen vorgesehen ist, kann entsprechend eines der Summenmodule 10, 12 ganz entfallen. Die erforderlichen Größen werden vorzugsweise von dem Pumpenaggregaten 2 bzw. den ihnen direkt zugeordneten individuellen Steuereinheiten 4 erfasst und an die Summenmodule 8, 10 und 12 weitergegeben, welche Bestandteil der zentralen Steuereinheit 6 sein können.

Die Ausgangsdaten, d. h. die Summe $P_s$ der aufgenommenen Leistungen $P_n$, wird von dem Summenmodul 8 einem Berechnungsmodul 14 zugeführt, in welchem eine spezifische Gesamtleistung $E_S$ des Gesamtsystems berechnet wird, indem die elektrische Leistung auf die hydraulische Last bezogen wird, bzw. die Gesamtleistung durch die gesamte hydraulische Last dividiert wird. Im Fall einer Parallelschaltung von Pumpen ist die hydraulische Last der Gesamtförderstrom $Q_s$, welcher aus dem Summenmodul 10 ausgegeben wird. Im Falle einer Reihenschaltung der Pumpenaggregate 2 ist die gesamte hydraulische Last die Gesamtförderhöhe $H_s$, welche aus dem Summenmodul 12 ausgegeben wird. Über ein Auswahlmodul 16 wird zwischen den Summen der Summenmodul 10 und 12 ausgewählt, je nachdem ob das System für eine Reihen- oder eine Parallelschaltung Verwendung findet. Wenn das System für eine dieser Anwendungen ausschließlich konfiguriert ist, kann, wenn auf eines der Summenmodul 10 oder 12 verzichtet wird, entsprechend auch auf das Auswahlmodul 16 verzichtet werden. Das Berechnungsmodul 14 dient der Kostenoptimierung, indem die spezifische Gesamtleistung $E_s$ für die Regelung des Gesamtsystems berücksichtigt wird.

Einem weiteren Berechnungsmodul 18 wird ebenfalls ausgangsseitig des Auswahlmoduls entweder der Gesamtförderstrom $Q_s$ oder die Gesamtförderhöhe $H_s$ zugeführt. Ferner wird dem Berechnungsmodul 18 eingangsseitig ein Referenz- Förderstrom $Q_{ref}$ oder eine Referenz- Förderhöhe $H_{ref}$ als zu erreichende hydraulische Last bzw. hydraulische Solllast zugeführt. Das Berechnungsmodul 18 bildet einen Regler für den Gesamtförderstrom $Q_S$ oder die Gesamtförderhöhe $H_S$ zum Erreichen der erforderlichen hydraulischen Sollwerte und gibt einen gewünschten Förderstrom $Q_D$ oder eine gewünschte Förderhöhe $H_D$ als gewünschte hydraulische Gesamtlast aus. Von dem Berechnungsmodul 18 wird die gewünschte hydraulische Last, d. h. der gewünschte Förderstrom $Q_D$ und/oder die gewünschte Förderhöhe $H_D$ einem Verteilermodul 20 zugeführt. Entsprechend wird von dem Berechnungsmodul 14 die spezifische Gesamtleistung $E_S$ dem Verteilermodul 20 zugeführt, welches diese Daten an die individuellen Steuereinheiten 4 der einzelnen Pumpenaggregate weiterverteilt.

Die individuellen Steuereinheiten 4 weisen jeweils ein Lastfaktorbestimmungsmodul 22 auf, in welchem ein individueller Lastfaktor $E_{gain,n}$ (hier $E_{gain,1}$ und $E_{gain,2}$) durch Division einer spezifischen Gesamtleistung $E_S$ durch die spezifische individuelle Leistung $E_{P,n}$ gebildet wird. Die spezifische individuelle Leistung $E_{p,n}$ wird dabei vom jeweiligen Pumpenaggregat 2 erfasst, genauso die individuelle hydraulische Last in Form des Durchflusses $Q_n$ oder der Förderhöhe $H_n$. Die individuelle Leistung $P_n$ wird durch die individuelle hydraulische Last dividiert, wodurch die spezifische individuelle Leistung $E_{P,n}$ ermittelt wird. Auf Grundlage der Formel

$$E_{gain,n} = \frac{E_S}{E_{P,n}}$$

wird in dem Lastfaktorbestimmungsmodul 22 aus diesen Eingangsgrößen der spezifische Lastfaktor $E_{gain,n}$ gebildet. Der Lastfaktor $E_{gain,n}$ wird einem Lastanpassungsmodul 24 zugeführt, in welchem auf Grundlage des Lastfaktors $E_{gain,n}$ und der gewünschten hydraulischen Last ,d. h. auf Grundlage des gewünschten Förderstroms $Q_D$ oder der gewünschten Förderhöhe $H_D$ der gewünschte individuelle Förderstrom $Q_{n,D}$ (hier $Q_{1,D}$ und $Q_{2,D}$) oder die gewünschte individuelle Förderhöhe $H_{n,D}$ (hier $H_{1,D}$ und $H_{2,D}$) für das jeweilige Pumpenaggregat 2 eingestellt wird. Dazu wird bei parallel geschalteten Pumpen, welche auf den Durchfluss $Q_n$ geregelt werden, vorzugsweise der Lastfaktor $E_{gain,n}$ mit der gewünschten hydraulischen Last, d. h. dem gewünschten Durchfluss $Q_D$ multipliziert. Bei Reihenschaltung wird entsprechend die gewünschte Förderhöhe $H_D$ mit dem Quadrat $E^2_{gain}$ des Lastfaktors $E_{gain}$ multipliziert. In dem nachfolgenden Regler 26 wird entsprechend der gewünschten individuellen Förderhöhe $H_{n,D}$ oder des gewünschten individuellen Förderstromes $Q_{n,D}$ auf Grundlage des in dem Pumpenaggregat 2 tatsächlich erfassten Durchflusses $Q_n$ (hier $Q_1$ und $Q_2$) bzw. der tatsächlich erfassten Förderhöhe $H_n$ (hier $H_1$ und $H_2$) als Feedback die hydraulische Last entsprechend geregelt. Ausgangsseitig des Reglers 26 ist ein Drehzahlsteller 28 angeordnet, welcher entsprechend die Drehzahl $n_n$ des Pumpenaggregates 2 einstellt.

Durch die Verwendung des Lastfaktors $E_{gain,n}$, welcher für jedes Pumpenaggregat 2 individuell gebildet wird, wird sichergestellt, dass dasjenige Pumpenaggregat, welches die beste Energieeffizienz aufweist, einen größeren Anteil an der aufzubringenden hydraulischen Last hat als ein Pumpenaggregat 2, welches eine geringere Energieeffizienz aufweist. Die individuellen Steuereinheiten 4 können darüber hinaus so ausgebildet sein, dass sie unter bestimmten Bedingungen das Pumpenaggregat ganz abschalten. Dies geschieht vorzugsweise dann, wenn der gebildete Lastfaktor $E_{gain,n}$ für das jeweilige Pumpenaggregat 2 ein vorbestimmtes Minimum unterschreitet. Ein Wiedereinschalten erfolgt dann, wenn der individuelle Lastfaktor $E_{gain,n}$ ein vorbestimmtes Maximum bzw. einen vorbestimmten Stellwert wieder überschreitet. Im ausgeschalteten Zustand wird der Bestimmung des Lastfaktors $E_{gain,n}$ anstelle der tatsächlichen spezifischen individuellen Leistung $E_{P,n}$ die spezifische individuelle $E_{P,n}$ zugrunde gelegt, welche vor dem Ausschalten geherrscht hat bzw. gemessen wurde.

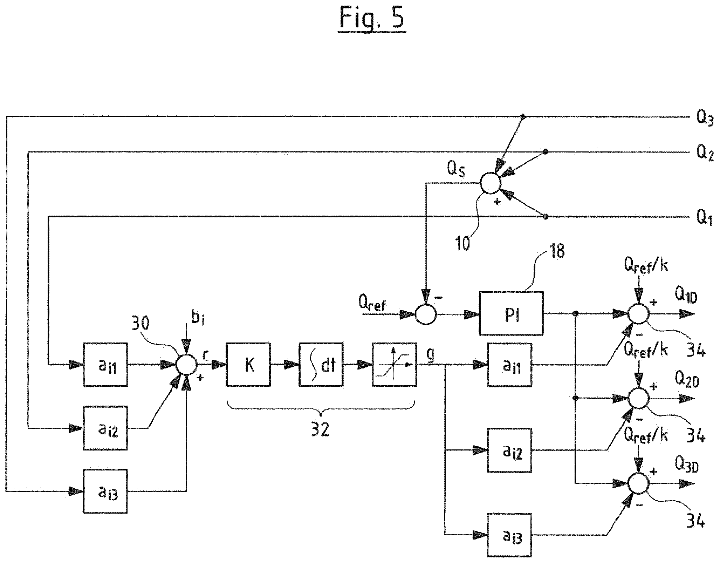

Um bei mehreren Pumpenaggregate 2, insbesondere bei in einem Brunnenfeld, wie es in Fig. 2 gezeigt ist, mit parallel geschalteten Pumpenaggregaten 2 sicherstellen zu können, dass die hydraulische Lastverteilung in vorgegebenen Grenzen erfolgt, kann eine zusätzliche Regelung übergeordnet werden, welche in Fig. 5 dargestellt ist. In den in Fig. 5 dargestellten Beispielen sind drei Pumpenaggregate 2, welche mit den Ziffern 1 - 3 bezeichnet sind, vorgesehen. Mit der Regelung soll eine anteilige Lastverteilung vorgegeben werden, beispielsweise auf Grundlage folgender Ungleichung $b_i > a_{i1}q_1 + a_{i2}q_2 + a_{i3}q_3$. In dieser Formel ist $b_i$ vorzugsweise eine Konstante, welche typischerweise 0 ist. $a_{i1}$, $a_{i2}$ und $a_{i3}$ sind Konstanten, welche die Grenzen für das Mischungsverhältnis aufzeigen oder vorgeben.

In Fig. 5 sind die tatsächlichen von den Pumpenaggregaten 2 erzeugten Durchflüsse mit $Q_1$, $Q_2$ und $Q_3$ bezeichnet. Diese werden in dem Summenmodul 10 zu dem Durchfluss $Q_S$ aufaddiert, wie anhand von Fig. 4 beschrieben wurde.

In dem Regler bzw. Berechnungsmodul 18 erfolgt die Durchflussregelung wie anhand von Fig. 4 beschrieben, wobei das Ausgangssignal für jedes der Pumpenaggregate 2 mit einem Feedforwardsignal $\frac{Q_{ref}}{k}$ aufaddiert wird, wobei k die Anzahl der in Betrieb befindlichen Pumpen und $Q_{ref}$ den Soll- Gesamtdurchfluss bezeichnet. Gleichzeitig wird jeder individuelle Durchfluss

$Q_1$, $Q_2$ und $Q_3$ mit dem Faktor $a_{i2}$ bzw. $a_{i2}$ oder $a_{i3}$ multipliziert. Die so multiplizierten Signale werden mit der Konstanten $b_i$ gemäß der vorangehend genannten Formel addiert. Anschließend wird in einem Regelmodul 32 ein Anpassungsfaktor g ermittelt. Dabei wird der Anpassungsfaktor g abhängig davon gebildet, inwieweit die Ungleichung in dem Addierer 30 erfüllt ist oder nicht. Der Anpassungsfaktor g wird mit den Konstanten $a_{i1}$, $a_{i2}$ und $a_{i3}$ multipliziert und das Ergebnis wird nachfolgend individuell für jedes Pumpenaggregat 2 in einem Addierer 34 mit dem Feedforwardfaktor $\frac{Q_{ref}}{k}$ und dem Ausgang des Reglers 18 addiert. Als Ergebnis werden so Werte für den gewünschten individuellen Durchfluss $Q_{1,D}$, $Q_{2,D}$ und $Q_{3,D}$ ausgegeben, welche der gewünschten individuellen hydraulischen Last $Q_{n,D}$, d. h. dem gewünschten individuellen Durchfluss $Q_{n,D}$ in Fig. 4 entsprechen. Nachfolgend erfolgt dann gemäß Fig. 4 in dem Lastanpassungsmodul 34 die Multiplikation mit dem individuellen Lastfaktor $E_{gain,n}$. So wird gleichzeitig mit der Energieoptimierung sichergestellt, dass die einzelnen Pumpen jeweils einen bestimmten Anteil der hydraulischen Last bzw. des Durchflusses erbringen bzw. dass sich dieser Anteil in gewissen Grenzen bewegt.

Die vorangehend beschriebenen Reglermoduleaddierer der Steuerung, können alle als Softwaremodule in einem Rechnersystem ausgeführt sein.

## Bezugszeichenliste

| | |
|---|---|
| 2 | Pumpenaggregate |
| 4 | individuelle Steuereinheiten |
| 6 | zentrale Steuereinheit |
| 8, 10, 12 | Summenmodule |
| 14 | Berechnungsmodul |
| 16 | Auswahlmodul |
| 18 | Berechnungsmodul |
| 20 | Verteilermodul |
| 22 | Lastfaktorbestimmungsmodul |
| 24 | Lastanpassungsmodul |
| 26 | Regler |
| 28 | Drehzahlsteller |
| 30 | Addierer |
| 32 | Regelmodul |
| 34 | Addierer |
| $E_{P,n}$ | spezifische individuelle Leistung einer individuellen Pumpe |
| $E_S$ | spezifische Gesamtleistung des gesamten Systems |
| $P_n$ | Leistung einer individuellen Pumpe |
| $Q_n$ | Durchfluss einer individuellen Pumpe |
| $H_n$ | Förderhöhe einer individuellen Pumpe |
| $Q_{ref}$ | Solldurchfluss des Gesamtsystems |
| $H_{ref}$ | Sollförderhöhe des Gesamtsystems |
| $H_D$ | gewünschte Förderhöhe des Gesamtsystems |
| $Q_D$ | gewünschter Förderstrom des Gesamtsystems |
| $H_{n,D}$ | gewünschte individuelle Förderhöhe |
| $Q_{n,D}$ | gewünschter individueller Förderstrom |
| $E_{gain}$ | Lastfaktor |
| $n,_n$ | Drehzahl einer individuellen Pumpe |
| a, b | Konstanten |
| g | Anpassungsfaktor |
| $Q_S$ | Förderstrom-Feedback des Gesamtsystems |
| $H_S$ | Förderhöhe-Feedback des Gesamtsystems |
| $P_S$ | Leistung-Feedback des Gesamtsystems |
| k | Anzahl der im Betrieb befindlichen Pumpen |

## Patentansprüche

1. Pumpensteuerverfahren zum Steuern des Betriebs eines Pumpensystems mit wenigstens zwei Pumpenaggregaten (2), welche parallel oder in Reihe zueinander angeordnet sind, mit folgenden Schritten:

Bestimmen einer spezifischen aufgenommenen Gesamtleistung Es des gesamten Pumpensystems, welche eine Gesamtleistung im Verhältnis zu einer hydraulischen Gesamtlast des gesamten Pumpensystems definiert,
Bestimmen einer spezifischen individuellen Leistung $E_{P,n}$ jedes Pumpenaggregates (2), welche eine erfasste individuelle aufgenommene Leistung im Verhältnis zu einer individuellen hydraulischen Last des jeweiligen Pumpenaggregates (2) definiert, **gekennzeichnet durch**:
Berechnen eines individuellen Lastfaktors $E_{gain,n}$ für jedes Pumpenaggregat (2) gemäß der Gleichung

$$E_{gain,n} = \frac{E_S}{E_{P,n}}$$

Anpassen der individuellen hydraulischen Last ($Q_n$; $H_n$) der Pumpenaggregate (2) in Abhängigkeit einer gewünschten gesamten hydraulischen Last ($Q_D$; $H_D$) sowie des individuellen Lastfaktors $E_{gain,n}$ des jeweiligen Pumpenaggregates (2) sowie individuelle Regelung der individuellen hydraulischen Last ($Q_n$; $H_n$) für jedes Pumpenaggregat (2), wobei ein Pumpenaggregat (2) der wenigstens zwei Pumpenaggregate (2) ausgeschaltet wird, wenn der jeweilige individuelle Lastfaktor $E_{gain,n}$, welcher zu diesem Pumpenaggregat (2) gehört, unterhalb eines vorbestimmten Minimums liegt, und ein Pumpenaggregat (2) der wenigstens zwei Pumpenaggregate (2) wieder eingeschaltet wird, wenn ein zugehöriger geschätzter individueller Lastfaktor $E_{gain, n}$, welcher zu diesem Pumpenaggregat gehört, oberhalb eines vorbestimmten Maximums liegt.

2. Pumpensteuerverfahren nach Anspruch 1, **dadurch gekennzeichnet, dass** das Anpassen der individuellen hydraulischen Last ($Q_n$; $H_n$) der Pumpenaggregate (2) in Abhängigkeit einer gewünschten individuellen Last des jeweiligen Pumpenaggregates (2) erfolgt, wobei die gewünschte individuelle hydraulische Last vorzugsweise durch Division einer gewünschten hydraulischen Gesamtlast ($Q_D$; $H_D$) durch die Anzahl (k) der aktiven Pumpenaggregate (2) bestimmt wird.

3. Pumpensteuerverfahren nach Anspruch 1 oder 2, **dadurch gekennzeichnet, dass** das Anpassen der individuellen hydraulischen Last ($Q_n$; $H_n$) jedes Pumpenaggregates (2) durch Multiplikation der gewünschten hydraulischen Last ($Q_D$; $H_D$) mit dem jeweiligen Lastfaktor $E_{gain,n}$ oder einer von diesem abgeleiteten Größe erfolgt.

4. Pumpensteuerverfahren nach einem der vorangehenden Ansprüche, **dadurch gekennzeichnet, dass** zumindest zwei Pumpenaggregate (2) in Reihe geschaltet sind und das Anpassen der individuellen hydraulischen Last ($H_n$) jedes Pumpenaggregates (2) durch Multiplikation der gewünschten hydraulischen Gesamtlast ($H_D$) mit dem Quadrat des jeweiligen Lastfaktors $E_{gain,n}$ erfolgt.

5. Pumpensteuerverfahren gemäß einem der vorangehenden Ansprüche, **dadurch gekennzeichnet, dass** wenigstens zwei Pumpenaggregate (2) in Reihe geschaltet sind, wobei die hydraulische Gesamtlast des gesamten Pumpensystems der Differenzdruck ($H_s$) über dem gesamten Pumpensystem ist und die individuelle hydraulische Last jedes Pumpenaggregates (2) der individuelle Differenzdruck ($H_n$) über dem jeweiligen Pumpenaggregat (2) ist.

6. Pumpensteuerverfahren gemäß Anspruch 5, **dadurch gekennzeichnet, dass** die gewünschte hydraulische Gesamtlast ein gewünschter gesamter Differenzdruck ($H_D$) ist.

7. Pumpensteuerverfahren gemäß einem der Ansprüche 1 bis 3, **dadurch gekennzeichnet, dass** wenigstens zwei Pumpenaggregate (2) parallel zueinander angeordnet sind, wobei die hydraulische Gesamtlast ($Q_s$) des gesamten Pumpensystems der Durchfluss ($Q_s$) des gesamten Pumpensystems ist und die individuelle hydraulische Last jedes Pumpenaggregates (2) der individuelle Durchfluss ($Q_n$) des jeweiligen Pumpenaggregate (2) ist.

8. Pumpensteuerverfahren gemäß Anspruch 7, **dadurch gekennzeichnet, dass** die gewünschte hydraulische Gesamtlast ein gewünschter Gesamtdurchfluss ($Q_D$) ist.

9. Pumpensteuerverfahren gemäß einem der vorangehenden Ansprüche, **dadurch gekennzeichnet, dass** für ein Pumpenaggregat (2), welches abgeschaltet worden ist, dessen Leistung vor dem Abschalten berücksichtigt wird.

10. Pumpensteuerverfahren gemäß einem der vorangehenden Ansprüche, **dadurch gekennzeichnet, dass** in einem, vorzugsweise jedem Pumpenaggregat (2) eine Messwerterfassung der individuellen hydraulischen Last ($Q_n$; $H_n$) sowie der Leistung ($P_n$) des Pumpenaggregates (2) erfolgt.

11. Pumpensteuerverfahren nach einem der vorangehenden Ansprüche, **dadurch gekennzeichnet, dass** ein Bestimmen der spezifischen individuellen Leistung $E_{P,n}$ jedes Pumpenaggregates (2) und die Berechnung des individuellen Lastfaktors $E_{gain,n}$ für jedes Pumpenaggregat (2) durch eine individuelle Steuereinheit (4) für das jeweilige Pumpenaggregat (2) oder durch eine zentrale Steuereinheit (6) für mehrere Pumpenaggregate (2) ausgeführt werden.

12. Pumpensteuerverfahren gemäß einem der vorangehenden Ansprüche, **dadurch gekennzeichnet, dass** es während des Betriebs des Pumpensystems kontinuierlich ausgeführt wird.

13. Pumpensteuerverfahren nach einem der vorangehenden Ansprüche, **dadurch gekennzeichnet, dass** die gewünschte individuelle hydraulische Last ($Q_{n,D}$; $H_{n,D}$) jedes Pumpenaggregates (2) derart eingestellt wird, dass die individuellen hydraulischen Lasten ($Q_n$; $H_n$) der zumindest zwei, vorzugsweise zumindest drei Pumpenaggregate (2) in einem vorbestimmten Verhältnis zueinander stehen.

14. Pumpensystem mit wenigstens zwei Pumpenaggregaten (2), welche parallel oder in Reihe angeordnet sind, mit Mitteln zum Bestimmen der gesamten und individuellen spezifischen Leistung, und mit zumindest einer Steuereinheit (4, 6), welche eingerichtet ist, das Verfahren gemäß dem Anspruch 1 auszuführen.

15. Pumpensystem gemäß Anspruch 14, **dadurch gekennzeichnet, dass** die Steuereinheit, welche ausgebildet ist zum Bestimmen des individuellen Lastfaktors $E_{gain,n}$ und zum Einstellen der individuellen hydraulischen Last ($Q_n$, $H_n$) als individuelle Steuereinheit (4) einem Pumpenaggregat (2) zugeordnet und vorzugsweise in dieses Pumpenaggregat (2) integriert ist.

**16.** Pumpensystem gemäß Anspruch 14 oder 15, **dadurch gekennzeichnet, dass** die Pumpenaggregate (2) in ihrer Drehzahl ($n_n$) einstellbare und geregelte Antriebsmotoren aufweisen.

**17.** Pumpensystem nach einem der Ansprüche 14 bis 16, **dadurch gekennzeichnet, dass** es ein Brunnenfeld bildet.

**Claims**

**1.** A pump control method for the control of the operation of a pump system with at least two pump assemblies (2) which are arranged parallel or in series to one another, with the following steps:

determining a specific consumed total power $E_S$ of the complete pump system which defines a total power in relation to a hydraulic total load of the complete pump system,
determining a specific individual power $E_{P,n}$ of each pump assembly (2) which defines a detected individual power in relation to the individual hydraulic load of the respective pump assembly (2),
**characterised by**
computing an individual load factor $E_{gain,n}$ for each pump assembly (2) according to the equation

$$E_{gain,n} = \frac{E_S}{E_{P,n}}$$

adapting the individual hydraulic load ($Q_n$; $H_n$) of the pump assemblies (2) in dependence on a desired hydraulic load ($Q_D$; $H_D$) as well as on the individual load factor $E_{gain,n}$ of the respective pump assembly (2) as well as individual regulation of the individual hydraulic load ($Q_n$; $H_n$) for each pump assembly (2), wherein a pump assembly (2) of the at least two pump assemblies (2) is switched off when the respective individual load factor $E_{gain,n}$ which belongs to this pump assembly (2) lies below a predefined minimum, and a pump assembly (2) of the at least two pump assemblies (2) is switched on when an associated, estimated individual load factor $E_{gain,n}$ which belongs to this pump assembly lies above a predefined maximum.

**2.** A pump control method according to claim 1, **characterised in that** the adaptation of the individual hydraulic load ($Q_n$; $H_n$) of the pump assemblies (2) is effected in dependence of a desired individual load of the respective pump assembly (2), wherein the desired individual hydraulic load is preferably determined by division of a desired hydraulic total load ($Q_D$; $H_D$) by the number ($k$) of active pump assemblies (2).

**3.** A pump control method according to claim 1 or 2, **characterised in that** the adaptation of the individual hydraulic load ($Q_n$; $H_n$) of each pump assembly (2) is effected by way of multiplication of the desired hydraulic load ($Q_D$; $H_D$) by the respective load factor $E_{gain,n}$ or a variable which is derived from this.

**4.** A pump control method according to one of the preceding claims, **characterised in that** at least two pump assemblies (2) are connected in series and the adaptation of the individual hydraulic load ($H_n$) of each pump assembly (2) is effected by way of multiplication of the desired hydraulic total load ($H_D$) by the square of the respective load factor $E_{gain,n}$.

**5.** A pump control method according to one of the preceding claims, **characterised in that** at least two pump assemblies (2) are connected in series, wherein the hydraulic total load of the complete pump system is the differential pressure ($H_S$) across the complete pump system, and the individual hydraulic load of each pump assembly (2) is the individual differential pressure ($H_n$) across the respective pump assembly (2).

**6.** A pump control method according to claim 5, **characterised in that** the desired hydraulic total load is a desired total differential pressure ($H_D$).

**7.** A pump control method according to one of the claims 1 to 3, **characterised in that** at least two pump assemblies (2) are arranged parallel to one another, wherein the hydraulic total load ($Q_S$) of the complete pump system is the flow ($Q_S$) of the complete pump system, and the individual hydraulic load of each pump assembly (2) is the individual flow ($Q_n$) of the respective pump assembly (2).

**8.** A pump control method according to claim 7, **characterised in that** the desired hydraulic total load is a desired total flow ($Q_D$).

**9.** A pump control method according to one of the preceding claims, **characterised in that** for a pump assembly (2) which has been switched off, its power before the switching-off is taken into account.

**10.** A pump control method according to one of the preceding claims, **characterised in that** a measurement value detection of the individual hydraulic load ($Q_n$; $H_n$) as well as of the power ($P_n$) of the pump assembly (2) is effected in one, preferably each pump assembly (2).

**11.** A pump control method according to one of the preceding claims, **characterised in that** a determining of the specific individual power $E_{P,n}$ of each pump assembly (2) and the computation of the individual load factor $E_{gain,n}$ for each pump assembly (2) is carried out by an individual control unit (4) for the respective pump assembly (2) or by a central control unit (6) for several pump assemblies (2).

**12.** A pump control method according to one of the preceding claims, **characterised in that** it is continuously carried out during the operation of the pump system.

**13.** A pump control method according to one of the preceding claims, **characterised in that** the desired individual hydraulic load ($Q_{n,D}$; $H_{n, D}$) of each pump assembly (2) is set in a manner such that the individual hydraulic loads ($Q_n$; $H_n$) of the at least two, preferably at least three pump assemblies (2) are in a predefined relation to one another.

**14.** A pump system with at least two pump assemblies (2) which are arranged in parallel or in series, **characterised by** at least one control unit (4, 6) which is designed for setting the desired hydraulic load ($Q_D$; $H_D$) for the complete pump system and for determining a specific consumed total power ($E_S$) for the complete pump system, at least one control unit (4, 6) which is designed for determining a specific individual power $E_{P,n}$ of an individual pump assembly (2), which defines an individual consumed power ($P_n$) relative to the individual hydraulic load ($Q_n$; $H_n$) of the respective pump assembly (2), as well as for the computation of an individual load factor $E_{gain,n}$ for the respective pump assembly according to the following equation

$$E_{gain,n} = \frac{E_S}{E_{P,n}}$$

and for adapting a desired individual hydraulic load of the respective pump assembly (2) in dependence on a desired hydraulic load ($Q_D$; $H_D$) and on the load factor $E_{gain,n}$, wherein the control units are designed such that they can carry out a pump control method according to one of the preceding claims.

**15.** A pump system according to claim 14, **characterised in that** the control unit which is designed for determining the individual load factor $E_{gain,n}$ and for setting the individual hydraulic load ($Q_n$; $H_n$), as an individual control unit (4) is assigned to a pump assembly (2) and is preferably integrated into this pump assembly (2).

**16.** A pump system according to claim 14 or 15, **characterised in that** the pump assemblies (2) are settable in their speed ($n_n$) and comprise drive motors controlled with a closed loop.

**17.** A pump system according to one of the claims 14 to 16, **characterised in that** forms a field of wells.

**Revendications**

**1.** Procédé de commande de pompe pour commander le fonctionnement d'un système de pompe comprenant au moins deux groupes moto-pompe (2), disposés en parallèle ou en série l'un par rapport à l'autre, comprenant les étapes suivantes :

    détermination d'une puissance totale absorbée spécifique *Es* de l'ensemble du système de pompe, qui définit une puissance totale par rapport à une charge hydraulique totale de l'ensemble du système de pompe, détermination d'une puissance individuelle spécifique $E_{P,n}$ de chaque groupe moto-pompe (2), qui définit une puissance absorbée individuelle détectée par rapport à une charge hydraulique individuelle de chaque groupe moto-pompe (2), **caractérisé par** les étapes suivantes: calcul d'un facteur de charge individuel $E_{gain,n}$ pour chaque groupe moto-pompe (2) selon l'équation

$$E_{gain,n} = \frac{E_S}{E_{P,n}}$$

    adaptation de la charge hydraulique individuelle ($Q_n$ ; $H_n$) des groupes moto-pompe (2) en fonction d'une charge hydraulique ($Q_D$ ; $H_D$) désirée ainsi que du facteur de charge individuel $E_{gain,n}$ du groupe moto-pompe (2) respectif ainsi que régulation individuelle de la charge hydraulique individuelle ($Q_n$ ; $H_n$) pour chaque groupe moto-pompe (2), un groupe moto-pompe (2) des au moins deux groupes moto-pompe (2) étant mis hors circuit lorsque le facteur de charge individuel $E_{gain,n}$ respectif qui appartient à ce groupe moto-pompe (2) se situe au-dessous d'un minimum prédéterminé, et un groupe moto-pompe (2) des au moins deux groupes moto-pompe (2) étant mis en circuit lorsqu'un facteur de charge individuel $E_{gain,n}$ estimé correspondant, qui appartient à ce groupe moto-pompe, se situe au-dessus d'un maximum prédéterminé.

**2.** Procédé de commande de pompe selon la revendication 1, **caractérisé en ce que** l'adaptation de la charge hydraulique individuelle ($Q_n$ ; $H_n$) des groupes moto-pompe (2) s'effectue en fonction d'une charge individuelle désirée du groupe moto-pompe (2) respectif, la charge hydraulique individuelle désirée étant déterminée, de préférence, par division d'une charge hydraulique totale ($Q_D$ ; $H_D$) désirée par le nombre (k) des groupes moto-pompe actifs.

3. Procédé de commande de pompe selon la revendication 1 ou 2, **caractérisé en ce que** l'adaptation de la charge hydraulique individuelle ($Q_n$ ; $H_n$) de chaque groupe moto-pompe (2) s'effectue par multiplication de la charge hydraulique ($Q_D$ ; $H_D$) désirée par le facteur de charge $E_{gain,n}$ respectif ou une grandeur dérivée de celuici.

4. Procédé de commande de pompe selon l'une des revendications précédentes, **caractérisé en ce qu'**au moins deux groupes moto-pompe (2) sont montés en série et **en ce que** l'adaptation de la charge hydraulique individuelle ($H_n$) de chaque groupe moto-pompe (2) s'effectue par multiplication de la charge hydraulique totale ($H_D$) désirée par le carré du facteur de charge $E_{gain,n}$ respectif.

5. Procédé de commande de pompe selon l'une des revendications précédentes, **caractérisé en ce qu'**au moins deux groupes moto-pompe (2) sont montés en série, la charge hydraulique totale de l'ensemble du système de pompe étant la pression différentielle $H_s$ sur l'ensemble du système de pompe et la charge hydraulique individuelle de chaque groupe moto-pompe (2) étant la pression différentielle individuelle ($H_n$) sur le groupe moto-pompe (2) respectif.

6. Procédé de commande de pompe selon la revendication 5, **caractérisé en ce que** la charge hydraulique totale désirée est une pression différentielle totale ($H_D$) désirée.

7. Procédé de commande de pompe selon l'une des revendications 1 à 3, **caractérisé en ce qu'**au moins deux groupes moto-pompe (2) sont disposés de manière parallèle entre eux, la charge hydraulique totale ($Q_s$) de l'ensemble du système de pompe étant le débit ($Q_s$) de l'ensemble du système de pompe et la charge hydraulique individuelle de chaque groupe moto-pompe (2) étant le débit individuel ($Q_n$) du groupe moto-pompe (2) respectif.

8. Procédé de commande de pompe selon la revendication 7, **caractérisé en ce que** la charge hydraulique totale désirée est un débit total ($Q_D$) désiré.

9. Procédé de commande de pompe selon l'une des revendications précédentes, **caractérisé en ce que**, pour un groupe moto-pompe (2) qui a été mis hors circuit, est prise en compte sa puissance avant la mise hors circuit.

10. Procédé de commande de pompe selon l'une des revendications précédentes, **caractérisé en ce que**, dans un, de préférence, dans chaque groupe moto-pompe (2) est opérée une détection de la valeur mesurée de la charge hydraulique individuelle ($Q_n$ ; $H_n$) ainsi que de la puissance ($P_n$) du groupe moto-pompe (2).

11. Procédé de commande de pompe selon l'une des revendications précédentes, **caractérisé en ce qu'**une détermination de la puissance individuelle spécifique $E_{P,n}$ de chaque groupe moto-pompe (2) et le calcul du facteur de charge individuel $E_{gain,n}$ pour chaque groupe moto-pompe sont réalisés par une unité de commande individuelle (4) pour le groupe moto-pompe respectif (2) ou par une unité de commande centrale (6) pour plusieurs groupes moto-pompe (2).

12. Procédé de commande de pompe selon l'une des revendications précédentes, **caractérisé en ce qu'**il est exécuté en continu pendant le fonctionnement du système de pompe.

13. Procédé de commande de pompe selon l'une des revendications précédentes, **caractérisé en ce que** la charge hydraulique individuelle ($Q_{n,D}$ ; $H_{n,D}$) désirée de chaque groupe moto-pompe (2) est réglée de telle sorte que les charges hydrauliques individuelles ($Q_n$ ; $H_n$) des au moins deux, de préférence, au moins trois groupes moto-pompe (2) se situent dans un rapport mutuel prédéterminé.

14. Système de pompe, comprenant au moins deux groupes moto-pompe (2), disposés en parallèle ou en série,
**caractérisé par**
au moins une unité de commande (4, 6), qui est conçue pour le réglage de la charge hydraulique totale ($Q_D$ ; $H_D$) désirée pour l'ensemble du système de pompe et pour la détermination d'une puissance totale absorbée spécifique ($Es$) pour l'ensemble du système de pompe,
au moins une unité de commande (4, 6), qui est conçue pour la détermination d'une puissance individuelle spécifique $E_{P,n}$ d'un groupe moto-pompe (2) individuel, laquelle définit une puissance absorbée individuelle ($P_n$) par rapport à la charge hydraulique individuelle ($Q_n$ ; $H_n$) du groupe moto-pompe (2) respectif, ainsi que pour le calcul d'un facteur de charge individuel $E_{gain,n}$ pour le groupe moto-pompe respectif selon l'équation suivante :

$$E_{gain,n} = \frac{E_S}{E_{P,n}}$$

et est conçue pour l'adaptation d'une charge hydraulique individuelle désirée du groupe moto-pompe (2) respectif en fonction d'une charge hydraulique ($Q_D$ ; $H_D$) désirée et du facteur de charge $E_{gain,n}$, les unités de commande étant réalisées de façon à pouvoir exécuter un procédé de commande de pompe selon l'une des revendications précédentes.

15. Système de pompe selon la revendication 14, **caractérisé en ce que** l'unité de commande conçue pour la détermination du facteur de charge individuel $E_{gain,n}$ et pour le réglage de la charge hydraulique individuelle ($Q_n$ ; $H_n$) est associée à un groupe moto-pompe (2) en tant qu'unité de commande individuelle (4) et, de préférence, intégrée dans ce groupe moto-pompe (2).

16. Système de pompe selon la revendication 14 ou 15, **caractérisé en ce que** les groupes moto-pompe (2) sont dotés de moteurs d'entraînement à vitesse ($n_n$) réglable et régulée.

17. Système de pompe selon l'une des revendications 14 à 16, **caractérisé en ce qu'**il forme un champ de puits.

Fig. 1

Fig. 2

Fig. 3

Fig. 4

EP 2 947 325 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009053923 A2
- EP 2610693 A1
- US 2009287357 A1